# EUROPEAN PATENT SPECIFICATION

(11) **EP 3 301 078 B1**
(45) Date of publication and mention of the grant of the patent: **09.12.2020**
(21) Application number: 17193928.3
(22) Date of filing: 29.09.2017
(51) Int. Cl.: C02F 11/00, C02F 11/14, C02F 1/56

(54) **METHOD FOR TREATING DREDGED MATERIAL OR SLUDGE**
VERFAHREN ZUR BEHANDLUNG VON BAGGERGUT ODER SCHLAMM
PROCÉDÉ DE TRAITEMENT DE MATÉRIAU DRAGÉ OU DE BOUES

(30) Priority: 29.09.2016 FI 20165729
(43) Date of publication of application: 04.04.2018
(73) Proprietor: Vesirakennus Ojanen Oy, 31930 Punkalaidun (FI)
(72) Inventor: OJANEN, Sami, 31930 Punkalaidun (FI); NIEMINEN, Juuso, 32700 Huittinen (FI)
(74) Representative: Berggren Oy, Turku

(56) References cited:
- CN-A- 102 583 950
- DE-A1- 19 519 802
- JP-A- 2013 017 989
- DATABASE WPI Thomson Scientific, London, GB; AN 1997-452620 & JP H09 206800 A 12 August 1997 (1997-08-12)

## Description

### Field of the invention

The invention relates to a method for treating dredged material or sludge according to the preamble of the appended independent claim.

### Background of the invention

Soft soils, such as clay, mire and peat, can be hardened by a so-called stabilization method, in which soft soil layers are hardened by a binding agent into a homogeneous hardened layer. This enables utilizing soil as hardened subsoil or as filling and construction material in a construction site. Nowadays, a more commonly used soil stabilization method is mass stabilization. In mass stabilization, binding agents are fed directly into the ground by means of a suitable supply equipment. The amounts of binding agents vary typically between 50-300 kg/m³. Binding agents used in mass stabilization are, among others, cement, lime products, slag, ash and gypsym materials. Mass stabilization is usually used directly to the ground on site but also dredged sludge can be mass stabilized. In that case, stabilization is performed in a dumping basin. Stabilized soil can be left in a dumping basin and utilized as a landfilling, or it can be transferred to another location.

Another method developed for soil stabilization is process stabilization, in which dredged material is transferred from a barge through a screen into an apparatus, where binding agents are mixed into the dredged material. After this, the treated dredged material is led away from the apparatus and transported to a desired place. Process stabilization is suitable for dredged material or sludges because it does not require mass stabilization equipment and the binding agents can be well mixed to the dredged material or sludge. Same binding agents are used in the process stabilization as in the mass stabilization. However, the amounts of binding agents are greater due to the greater water content of the dredged material or sludge.

By means of mass or process stabilization also contaminated soil can be treated so that the detrimental elements among the soil can be bound by means of a binding agent so that they cannot dissolve away. Thus, the stabilized soil can be utilized.

However, the above presented typical mass and process stabilization methods require several working phases and separate equipment, the soil treating being thus troublesome and time-consuming.

Removal of the soil from the bottom of the waters is performed by suction dredging, for example. In suction dredging, a suction dredger shreds bottom sediment by means of a shredder which simultaneously feeds the dredged material or sludge comprising the sediment to a pump. The pump pumps the dredged material or sludge along the pipeline to a dumping basin, or for example, to sacks made of geotextile (geotube) which are used especially in treating contaminated soil. In connection with suction dredging, flocculants, such as polymers, are commonly used to enhance settlement of the solid matter in the dumping basin or geotube, after which excess water can be led back into the waters. The flocculant can be added into the dredged material or sludge before the dumping basin or geotube.

The patent publication CN 102 583 950 discloses a method for treating dredged material. In the presented method a flocculant and a binding agent are mixed with the dredged material using pipe mixers.

The patent publication JP H09 206800 discloses a processing method of dredged sludge for forming a pellet with a stirring granulation tank, and which pellet can be deposited back to a seabed. Powder zeolite, cement, inorganic coagulant and a polymer coagulant are added into dredged material for forming pellets.

The patent publication DE 195 19 802 discloses a binder for sludge conditioning. The patent publication JP 2013 017989 discloses using of a flocculant in the treatment of dredged sludge.

### Object and description of the invention

An object of the present invention is to reduce or even eliminate the above-mentioned problems appearing in prior art.

An object of the present invention is to introduce a new method for treating dredged material or sludge, by means of which treatment treating dredged material or sludge can be improved and simplified, and treatment costs can be lowered. An object of the method for treating dredged material or sludge according to the invention is especially to stabilize and harden the dredged material or sludge comprising detrimental elements as simply, efficiently and rapidly as possible.

To achieve this object, the method according to the invention are primarily characterised in what is presented in the claim 1.

Some preferred embodiments of the invention are disclosed in the other, dependent claims.

The features and advantages of the invention described in this application text relate to the method, arrangement and use, even though it is not always specifically mentioned.

In a typical method according to the invention for treating dredged material or sludge
- dredged material or sludge comprising detrimental elements and having solids content of 1-45 weight-%, typically 5-45 weight-%, is led along a pipeline into a treatment basin,
- at least one flocculant is added to the dredged material or sludge in the pipeline, and
- water and solid matter in the dredged material or sludge are let to separate in a treatment basin, and
- water is led away from the treatment basin, and
furthermore, a binding agent is added to the dredged material or sludge in the pipeline prior to flocculant, wherein the particles are formed by the flocculant, binding agent and detrimental elements and are let to sink down in the treatment basin and be separated from the water.

A typical arrangement for treating dredged material or sludge comprises
- a pipeline for leading dredged material or sludge having solids content of 1-45 weight-%, more typically 5-45 weight-%, to a treatment basin,
- means for adding at least one flocculant to the dredged material or sludge in the pipeline, and
- means for adding at least one binding agent to the dredged material or sludge in the pipeline.

The method according to the invention can be used especially for treating dredged material or sludge comprising detrimental elements, that is contaminated soil. Dredged material or sludge from which water is separated, comprises detrimental elements bound to the rest of the soil. The method according to the invention enables binding of the detrimental elements in the dredged material or sludge so that they are unable to dissolve away from the soil, and consequently, the soil can be further utilized. The treated soil can be utilized either in a dumping basin or transferred elsewhere. The method according to the invention is especially suitable for treating dredged material or sludge dredged from the bottom of the waters, comprising bottom sediment and typically also detrimental elements.

The method according to the invention is based on the fact that it has now been surprisingly found that dredged material or sludge comprising detrimental elements can be treated simply and efficiently by adding both the binding agent and the flocculant to the dredged material or sludge in the pipeline along which dredged material or sludge is led to the dumping basin, geosacks or the like. Thus, the method according to the invention enables on-line stabilization and hardening of the dredged material or sludge. The binding agent binds detrimental elements in the dredged material or sludge, and by means of the flocculant, the particles formed by the binding agent and the detrimental elements can be more efficiently separated from the water. It is possible to add the binding agent and the flocculant directly into the pipeline without separate mixing devices, due to the fact, that it has now been surprisingly found that the flow in the pipeline guarantees sufficient mixing for forming particles formed by the detrimental elements, binding agent and flocculant.

In the present application, dredged material refers to dredged material or sludge comprising water and soil, for example bottom sediment originating from the waters. Solids content, that is soil content, of the dredged material or sludge flowing in the pipeline can vary, but water content should be such that the material or sludge can be pumped. Typically, the solids content of the dredged material or sludge flowing in the pipeline is 1-45 weight-%, and more typically 5-45 weight-%, or 10-40 weight-%. Dredged material can be suction dredged sludge or shovel dredged soil. Dredged material can also be peaty aqueous ground which can be pumped, or the like material comprising aqueous soil that can be pumped. In this connection, soil refers to, among others, sand, gravel, earth, peat and the like sediments in the ground and waters, and mixtures thereof. Among the dredged material or sludge, there can also be detrimental elements, and the method according to the invention is especially for binding these detrimental elements to the soil at the same time as the soil is hardened by means of the binding agent. Detrimental elements can be among the soil or water in the dredged material. In the present application, detrimental elements refer to all substances which can exist among the dredged material or sludge, and which are commonly regarded as detrimental to the environment, and their dissolution into the ground along the water should be prevented. Elements detrimental for the environment may have ended up to the bottom sediments of the waters from traffic, industry or waste waters, among others. Detrimental elements are, for example, various metals as well as PAH and PCB compounds. Concentration of detrimental elements among the dredged material or sludge may vary and their concentration has no significance for the functioning of the method according to the invention. The method according to the invention is suitable to be used for binding all kinds of detrimental elements.

In the method according to the invention, flocculant and binding agent are added to the dredged material or sludge. In the method according to the invention, a binding agent is added to the dredged material or sludge in the pipeline prior to flocculant. The fact that the binding agent is added to the dredged material or sludge prior to the flocculant means, in this application, that at least one binding agent is added prior to the flocculant, or at least part of the binding agent is added prior to the flocculant. This way, the detrimental elements in the dredged material or sludge can be bound to the binding agent prior to addition of the flocculant. By using the binding agent together with the flocculant, separation of the detrimental elements from the dredged material or sludge can be enhanced. Already small portions of binding agent improve functioning of the flocculant, such as a polymer, whereby it can also be used with difficult sludges for which none of the flocculant polymers normally suits well. Due to the flocculant, the binding agent and the detrimental elements bound to it and the like form heavier particles to the dredged material and sludge, sinking more easily to the bottom in the treatment basin. Thus, surprisingly, all kinds of sludges and dredged material can be efficiently treated by means of the method according to the invention.

When adding and mixing the binding agent to the dredged material or sludge directly in the pipeline, at least one working phase can be taken away, in other words, it is no longer necessary to treat dredged material or sludge in a separate equipment, or to treat dredged material by means of an excavator together with its feeding and mixing equipment for mixing and feeding the binding agent to the dredged material. This fastens treating of dredged material, and thus, remarkably lowers the costs, due to reduced need for transferring of dredged material from one location and one equipment to another. Separate stabilization phase no longer takes time when it can be performed simultaneously in the pipeline while transferring dredged material or sludge to a dumping basin or the like.

The method according to the invention also provides efficient and even mixing of the binding agent and the flocculant, whereby the effect of the binding agents for binding the detrimental elements among the soil is more efficient. The flocculant and the binding agent are evenly mixed in the pipeflow to the dredged material or sludge to be treated. Efficient mixing enables also use of smaller amounts of the binding agent, and thus, also the costs can be reduced.

Flow rate of the dredged material or sludge in the pipeline is typically between 1-10 m/s, more typically 4-6 m/s, which is sufficient for obtaining an even mixing in the pipeline. The flow rate can be obtained by pumping dredged material or sludge into the pipeline. Length of the pipeline varies from a location to another. At its smallest, the length of the pipeline is such that inlets for the flocculant and the binding agent, and sufficient mixing distance for the matters before the treatment basin can be adapted to the pipeline. By means of the pipeline, the dredged material or sludge can be transferred even long distances along the pipeline, and, if needed, for example pumping stations can be added for maintaining sufficient flow rate in the pipeline. For example, the length of the pipeline can vary from a few metres even to kilometres, the length of the pipeline can be for example 40 m - 20 km but the length can be less, or considerably more.

In the method according to the invention, the pipeline to be used may consist of one or several pipelines, the pipeline referring to a piping or the like for transferring dredged material or sludge, along which the dredged material or sludge is mainly transferred from a dredger or a temporary storage location to a treatment basin, geotubes, or the like. Transfer to a treatment basin can also be performed via some intermediate basin or sack, which in the present application is considered to be a part of the pipeline. The pipeline may also comprise separate pumping stations in the pipeline, and other necessary actuators. Preferably, the dredged material or sludge is transferred directly from a dredger, such as a suction dredger, or from a temporary storage/barge along the pipeline to a treatment basin, geotube, or the like. Typically, the dredged material or sludge is pumped into the pipeline. In a preferred embodiment, dredged material or sludge is pumped directly from a suction dredger to the pipeline, along which the dredged material or sludge is transferred to a treatment basin, such as a dumping basin or geotubes.

Feeding the binding agent and flocculant into the pipeline can be performed by any suitable means, such as by using pressurised air or by pumping, and they can be applied in a dry form or as an aqueous solution. Typically, the binding agent is fed to the dredged material or sludge by means of pressurised air. In a typical embodiment, the flocculant is fed to the pipeline as liquid by means of its own pump. Feeding and mixing process of the binding agent and flocculant can be controlled by a separate control unit, by which the amount of air, and flow of the binding agent and the flocculant, among others, can be adjusted. Typically, the binding agent and the flocculant have their own control units. The binding agent and the flocculant are typically fed directly into the pipeline where the dredged material or sludge is flowing. In an embodiment, it is possible to feed the binding agent and/or the flocculant into at least one side stream, which is connected to the pipeline where the dredged material or sludge mainly flows to a treatment basin.

The binding agents used in the method according to the invention is a cement or lime based binding agent, slag, ash or some gypsym material, or a mixture of the binding agents. One or more of the aforementioned can be used as a binding agent. The amount of the binding agent to be added depends on the dredged material or sludge to be treated, and on the detrimental elements they possibly include, and thus, the amount is to be optimized separately for each dredged material or sludge. Especially the amount of the binding agent depends on the water content of the dredged material or sludge. According to the invention, the amounts of the binding agents vary between 50-300 kg/m³.

The flocculants to be used may also be the same as the flocculants normally used in suction dredge. The flocculant or the flocculants used in the method according to the invention may comprise polymer, and they can be selected from the commonly known flocculant polymers. In the method according to the invention, one or several flocculants can be used.

The binding agents and the flocculants should be chosen separately for each application, due to different compositions of the soil and possible detrimental elements existing in it.

The method is suitable to be used in dumping basins, or in geotube/geosack technique. The binding agent remarkably improves functioning of the flocculant, such as flocculant polymer, whereby when using them with geotubes, filling degree of the geotubes can be remarkably improved, and thus, the costs can also be decreased. When the geotubes are filled by utilizing the method according to the invention, the binding agent and the flocculant are added to the dredged material or sludge before leading the dredged material or sludge to the geotube/sack.

### Short description of the drawings

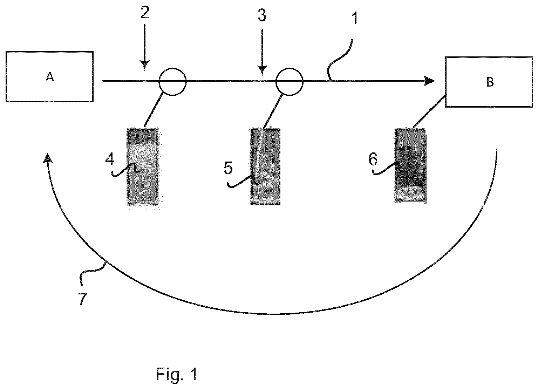

In the following, the invention is described in more detail with reference to the appended Figure 1, which shows a principle of an embodiment according to the invention.

### Detailed description of the invention

The principle of the on-line stabilization method according to the invention is illustrated in Figure 1. Figure 1 shows an embodiment according to the invention and it does not limit the invention. Dredged material or sludge can be dredged from the bottom of the waters by means of a suction dredger, a shovel dredger or other means/method suitable for purpose, or optionally, the dredged material or sludge is in a barge or in a temporary storage. The dredged material or sludge A is led, for example pumped, from a dredger or temporary storage to a pipeline 1, along which the dredged material or sludge is led to a dumping basin and/or geotubes or the like treatment site B, where separation of water from the solid content of the dredged material or sludge can be performed. In the pipeline, binding agent 2 is added to the dredged material or sludge, and in addition, flocculant 3 is added to the dredged material or sludge. Typically, the binding agent 2 is added to the dredged material or sludge prior to the flocculant 3, so that the binding agent has time to evenly mix to the material (illustrative figure of the dredged material or sludge by reference 4) before addition of the flocculant. The binding agent can also be added after the addition of the flocculant. Due to the flocculant 3, the mixture of the binding agent and the solid matter forms heavy particles (illustrative figure by reference 5), which can effectively be separated from the dredged material/sludge in a dumping basin, geotube or the like, where the material is led along the pipeline. The solid matter separates from the water when it is let stand in a dumping basin, geotube or the like (illustrative figure by reference 6), and the water can be drained off from the surface, or alternatively, led away from the bottom through underdrains. The water can be led back to the waters (reference 7), and the solid matter which has been separated by means of the binding agent and the flocculant can be used as landfilling, for example. The solid matter may contain detrimental elements, which can be simultaneously bound to the solid matters by means of the binding agent.

## Claims

1. Method for stabilizing and hardening dredged material or sludge (A), in which method
- dredged material or sludge (A) comprising water, soil and detrimental elements and having solids content of 1-45 weight-%, typically 5-45 weight-%, is led along a pipeline (1) into a treatment basin (B).
- at least one flocculant (3) is added to the dredged material or sludge (A) in the pipeline (1),
- water and solid matter in the dredged material or sludge (A) is let to separate in a treatment basin (B), and
- water is led away from the treatment basin (B),
wherein a binding agent (2) is also added to the dredged material or sludge (A) in the pipeline prior to the flocculant (3), wherein the binding agent (2) and the flocculant (3) are added directly into the pipeline without separate mixing devices, wherein the detrimental elements are bound to the soil and the soil is hardened by means of the binding agent, wherein the particles are formed by the flocculant (3), binding agent (2) and detrimental elements and are let to sink down in the treatment basin (B) and be separated from the water, wherein the binding agent (2) is a cement or a lime based binding agent, slag, ash or a gypsum material, or a mixture of any of the aforementioned binding agents and the amount of the added binding agent is between 50 and 300 kg/m³.

2. Method according to claim 1, **characterized in that** the treatment basin (B) is a dumbing basin or a geotube.

3. Method according to claim 1 or 2, **characterised in that** the dredged material or sludge comprises bottom sediment originating from the waters.

4. Method according to any of the preceding claims, **characterised in that** the dredged material or sludge (A) is led directly from a dredger to the treatment basin (B) along the pipeline (1), or from a temporary location to the treatment basin (B) along the pipeline (1).

5. Method according to any of the preceding claims, **characterised in that** the dredged material or sludge (A) is pumped into the pipeline (1).

6. Method according to any of the preceding claims, **characterised in that** the flow rate of the dredged material or the sludge (A) in the pipeline (1) is about 1-10 m/s, most typically about 4-6 m/s.

7. Method according to any of the preceding claims, **characterised in that** the flocculant (3) comprises polymer.

## Patentansprüche

1. Verfahren zum Stabilisieren und Härten von Baggergut oder Schlamm (A), wobei bei dem Verfahren
- Baggergut oder Schlamm (A), umfassend Wasser, Erde und schädliche Elemente und mit einem Feststoffgehalt von 1 bis 45 Gew.-%, typischerweise 5 bis 45 Gew.-%, entlang einer Rohrleitung (1) in ein Aufbereitungsbecken (B) geführt wird,
- dem Baggergut oder Schlamm (A) in der Rohrleitung (1) mindestens ein Flockungsmittel (3) zugesetzt wird,
- Wasser und Feststoffe im Baggergut oder Schlamm (A) in einem Aufbereitungsbecken (B) abgetrennt werden, und
- Wasser vom Aufbereitungsbecken (B) weggeführt wird,
wobei dem Baggergut oder Schlamm (A) in der Rohrleitung vor dem Flockungsmittel (3) auch ein Bindemittel (2) zugesetzt wird, wobei das Bindemittel (2) und das Flockungsmittel (3) ohne separate Mischvorrichtungen direkt in die Rohrleitung gegeben werden, wobei die schädlichen Elemente an der Erde gebunden sind und die Erde mittels des Bindemittels gehärtet wird, wobei die Partikel durch das Flockungsmittel (3), das Bindemittel (2) und schädliche Elemente gebildet werden und im Aufbereitungsbecken (B) absinken und vom Wasser getrennt werden, wobei das Bindemittel (2) ein Bindemittel auf Zement- oder Kalkbasis, Schlacke, Asche oder ein Gipsmaterial oder eine Mischung eines der vorgenannten Bindemittel ist, und die Menge des zugesetzten Bindemittels zwischen 50 und 300 kg/m³ liegt.

2. Verfahren nach Anspruch 1, **dadurch gekennzeichnet, dass** das Behandlungsbecken (B) ein Stummbecken oder ein Geotube ist.

3. Verfahren nach Anspruch 1 oder 2, **dadurch gekennzeichnet, dass** das Baggergut oder der Schlamm Bodensedimente aus dem Wasser umfasst.

4. Verfahren nach einem der vorhergehenden Ansprüche, das **dadurch gekennzeichnet ist, dass** das Baggergut oder der Schlamm (A) direkt von einem Bagger zum Aufbereitungsbecken (B) entlang der Rohrleitung (1) oder von einem vorübergehenden Ort zum Aufbereitungsbecken (B) entlang der Rohrleitung (1) geleitet wird.

5. Verfahren nach einem der vorhergehenden Ansprüche, **dadurch gekennzeichnet, dass** das Baggergut oder der Schlamm (A) in die Rohrleitung (1) gepumpt wird.

6. Verfahren nach einem der vorhergehenden Ansprüche, **dadurch gekennzeichnet, dass** die Fließgeschwindigkeit des Baggermaterials oder des Schlamms (A) in der Rohrleitung (1) etwa 1 bis 10 m/s, am typischsten etwa 4 bis 6 m/s beträgt.

7. Verfahren nach einem der vorhergehenden Ansprüche, **dadurch gekennzeichnet, dass** das Flockungsmittel (3) Polymer umfasst.

## Revendications

1. Procédé de stabilisation et de durcissement de matériau dragué ou de boues (A), dans lequel procédé
- le matériau dragué ou les boues (A), comprenant de l'eau, le sol et des éléments nuisibles et ayant une teneur en solides de 1 à 45 % en poids, typiquement de 5 à 45 % en poids, sont conduits le long d'un pipeline (1) dans un bassin de traitement (B),
- au moins un floculant (3) est ajouté au matériau dragué ou aux boues (A) dans le pipeline (1),
- l'eau et les matières solides présentes dans le matériau dragué ou les boues (A) sont séparées dans un bassin de traitement (B), et
- l'eau est conduite à distance du bassin de traitement (B), dans lequel un agent de liaison (2) est également ajouté au matériau dragué ou aux boues (A) dans le pipeline avant le floculant (3), dans lequel l'agent de liaison (2) et le floculant (3) sont ajoutés directement dans le pipeline sans dispositifs de mélange séparés, dans lequel les éléments nuisibles sont liés au sol et le sol est durci au moyen de l'agent de liaison, dans lequel les particules sont formées par le floculant (3), l'agent de liaison (2) et les éléments nuisibles et sont laissées couler dans le bassin de traitement (B) et séparées de l'eau, dans lequel l'agent de liaison (2) est un agent de liaison à base de ciment ou de chaux, un matériau de type scorie, cendre ou gypse, ou un mélange de l'un quelconque des agents de liaison mentionnés ci-dessus et la quantité de l'agent de liaison ajouté est comprise entre 50 et 300 kg/m³.

2. Procédé selon la revendication 1, **caractérisé en ce que** le bassin de traitement (B) est un bassin de nivellement ou un géotube.

3. Procédé selon la revendication 1 ou 2, **caractérisé en ce que** le matériau dragué ou les boues comprennent des sédiments de fond provenant des eaux.

4. Procédé selon l'une quelconque des revendications précédentes, **caractérisé en ce que** le matériau dragué ou les boues (A) sont conduits directement depuis une drague vers le bassin de traitement (B) le long du pipeline (1), ou depuis un emplacement provisoire vers le bassin de traitement (B) le long du pipeline (1).

5. Procédé selon l'une quelconque des revendications précédentes, **caractérisé en ce que** le matériau dragué ou les boues (A) sont pompés dans le pipeline (1).

6. Procédé selon l'une quelconque des revendications précédentes, **caractérisé en ce que** le débit du matériau dragué ou des boues (A) dans le pipeline (1) est d'environ 1 à 10 m/s, le plus typiquement d'environ 4 à 6 m/s.

7. Procédé selon l'une quelconque des revendications précédentes, **caractérisé en ce que** le floculant (3) comprend un polymère.
